# EUROPEAN PATENT SPECIFICATION

(11) **EP 1 975 934 B1**
(45) Date of publication and mention of the grant of the patent: **20.07.2011**
(21) Application number: 08006010.6
(22) Date of filing: 28.03.2008
(51) Int. Cl.: G11B 17/04

(54) **Optical disk device**
Optische Plattenvorrichtung
Dispositif à disque optique

(30) Priority: 28.03.2007 JP 2007083406
(43) Date of publication of application: 01.10.2008
(73) Proprietor: Funai Electric Co., Ltd., Daito-shi, Osaka 574-0013 (JP)
(72) Inventor: Arase, Hiroyuki, Daito-shi Osaka 574-0013 (JP)
(74) Representative: Grünecker, Kinkeldey, Stockmair & Schwanhäusser Anwaltssozietät

(56) References cited:
- EP-A- 0 478 198
- WO-A-2006/006484
- JP-A- 2003 077 260
- JP-A- 2006 018 959

## Description

### BACKGROUND

The present invention relates to an optical disk device such as DVD, CD, and BD, and more particularly, to an optical disk device that is designed to reduce a variation of a stop-position at the time of an ejection operation of the disk tray and to prevent the disk tray from shaking in the left and right direction at the time of the ejection operation or an insertion operation of the disk tray.

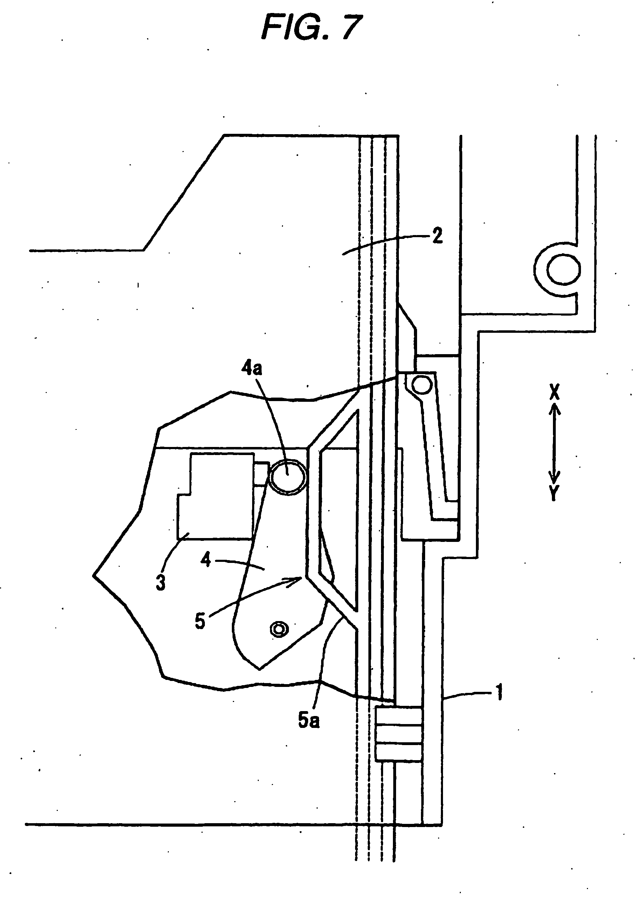

As shown in Fig. 7, there is a related-art optical disk device in which a disk tray 2 is mounted inside a loader chassis 1 in a movable manner in a movement direction. A tray-out switch 3 and a switch lever 4 for operating the tray-out switch 3 are provided in a position close to the front end of the loader chassis 1. A switch rib 5 having a straight-shaped slope portion 5a is provided on the rear surface of a position close to the rear end of the disk tray 2.

In the optical disk device, when a drive motor moves the disk tray 2 to a position close to a stop position in the ejection direction Y, the straight-shaped slope portion 5a of the switch rib 5 pushes a boss portion 4a of the switch lever 4 toward the tray-out switch 3 so as to operate (turn on) the tray-out switch 3 and to stop a voltage supply to the drive motor. Accordingly, the disk tray 2 is stopped at the stop position. In this way, when the disk tray 2 is stopped, as shown in Fig. 7, the boss portion 4a of the switch lever 4 runs on the top portion of the switch rib 5 and the boss portion 4a pushes the tray-out switch 3.

On the other hand, there is a known disk device in which a straight-shaped slope surface of a protrusion portion formed in the disk tray pushes a round push portion of an ON/OFF lever toward a detection switch to run on the protrusion portion when the disk tray is ejected, so that the detection switch is turned on to detect a state where the disk tray is in an open state (ejection state) (see Patent Document 1).
Patent Document 1: Japanese Patent Publication No. 2006-18969A

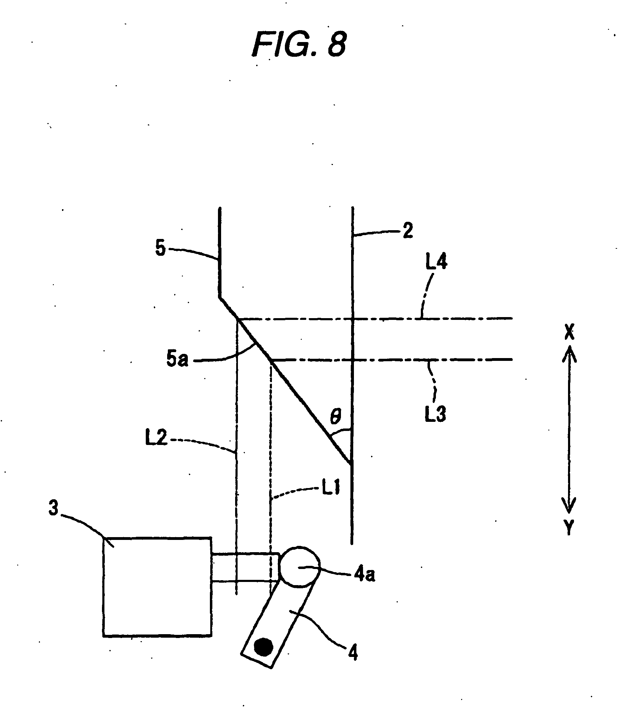

However, as shown in Fig. 8, since examples of the tray-out switch 3 include a type that can be operated (turned on) by pushing the boss portion 4a up to the dashed line L2 as well as a type that can be operated just by slightly pushing the boss portion 4a of the switch lever 4 up to the dashed line L1. Accordingly, like the related-art optical disk device described above, when the slope portion 5a of the switch rib 5 is formed in a straight shape, a variation of operation position of the tray-out switch 3 directly affects the stop position of the disk tray 2. As a result, a problem arises in that variation of the stop position of the disk tray 2 occurs in the region from the dashed-dotted lines L3 to L4. The region of the stop position variation becomes larger as a slope angle θ of the slope portion 5a of the switch rib 5 with respect to the movement direction (X-Y direction) of the disk tray 2 becomes smaller.

The region of the stop-position variation of the disk tray 2 becomes smaller when the slope angle θ of the slope portion 5a of the switch rib 5 is set to a larger value, but when the slope angle θ is set to an excessively larger value, a problem arises in that the boss portion 4a of the switch lever 4 strongly interferes with the slope portion 5a to generate interference sound (abnormal noise), and thus it is not a desirable solution.

Like the related-art optical disk device described above, when the disk tray 2 is stopped in the state where the boss portion 4a of the switch lever 4 runs on the top portion of the switch rib 5 and pushes the tray-out switch 3, since a repelling force of the tray-out switch 3 for pushing back the boss portion 4a of the switch lever 4 acts on the switch rib 5 of the disk tray 2 through the boss portion 4a of the switch lever 4, the disk tray 2 shakes in the left and right direction at the time of stopping the ejection operation of the disk tray 2 or starting the insertion operation of the disk tray 2. As a result, a problem arises in that operation quality deteriorates.

Additionally, even in the known disk device disclosed in the Patent Document 1, since the configuration in which the straight slope surface of the protrusion portion formed in the disk tray pushes the round push portion of the ON/OFF lever toward the switch to thereby run on the protrusion portion at the time the disk tray is ejected is the same as that of the relted-art optical disk device described above, the same problem as that of the related-art optical disk device occurs.

WO 20061006484 A1 discloses a disk device comprising a loader chassis having a switch including a contact terminal and a tray provided with a cam surface having a slope to operate the switch when the tray is moved into an ejected position.

EP 0478198 A1 discloses an optical disk device comprising a loader chassis provided with a tray-out switch, wherein a disk tray is mounted In the loader chassis in a movable manner. Said disk tray has a projection to operate said tray-out switch, when the disk tray is in an ejected position.

JP 2003 077260 A discloses an optical disk device comprising a case in which a disk tray is movable between a stowed position and an ejected position. The disk tray is provided with a slider having a slope surface at an end thereof for engaging a sliding part of a detection switch lever operating a switch when the disk tray is ejected into the ejected position. When the switch is operated, a voltage supply to a tray drive motor is stopped.

### SUMMARY

Accordingly, it is an object of the invention to provide an optical disk device that is designed to reduce the variation of the stop position of the disk tray and to desirably prevent the disk tray from shaking in the left and right direction at the time of stopping the ejection operation of the disk tray or starting the insertion operation of the disk tray without increasing a cost

This object is solved by the features of claim 1.

Further improvements are laid down in the sub-claims.

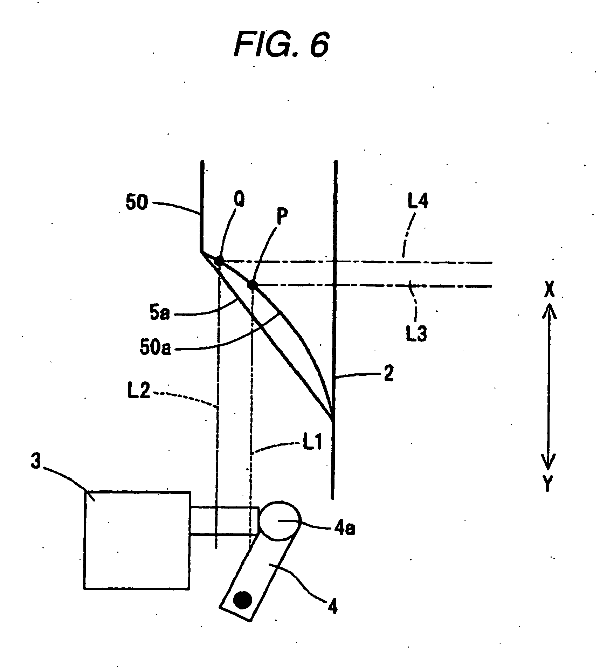

According to the optical disk device of the invention, since the slope portion with a concave curve shape (hereinafter, referred to as a concave curve-shaped slope portion) or more desirably the circular-arc slope portion is formed in the switch rib instead of the straight-shaped slope portion, as shown in Fig. 6, a slope angle (slope angle with respect to the movement direction of the disk tray) of an effective pushing region (region from the point P to the point Q) of the concave curve-shaped slope portion 50a that pushes the switch lever 4 in an operation region of the tray-out switch 3 (a region from the dashed lines L1 to the dashed line L2) becomes larger than that of the straight-shaped slope portion 5a. Accordingly, it is possible to reduce a region (region from the dashed-dotted line L3 to the dashed-dotted line L4) of stop position variation of the disk tray. Additionally, since the slope angle of the end portion of the concave curve-shaped slope portion 50a dose to the switch rib bottom portion is small and the slope angle becomes larger toward the effective pushing region, interference between the concave curve-shaped slope portion 50a and the switch lever 4 is small at first and becomes larger. Therefore, differently from the straight-shaped slope portion 5a that strongly interferes with the switch lever 4 from the beginning, interference sound (abnormal noise) does not occur.

In particular, according to the optical disk device, since the slope angle of the first slope surface with respect to the movement direction at the contact portion to the switch lever when the switch lever comes into contact with the tray-out switch is set to 45° or more and the slope angle of the first slope surface with respect to the movement direction at the end portion of the first slope surface is set to 60° or less, the switch lever is pushed by the concave curve-shaped slope portion to operate the tray-out switch in the effective pushing region in which the slope angle of the concave curve-shaped slope portion is in the range of 45° to 60°. Accordingly, it is possible to largely reduce a region of stop-position variation of the disk tray compared with a region of operation variation of the tray-out switch. Further, since the maximum slope angle is 60°, a push operation of the switch lever is not difficult and interference sound does not occur.

According to the optical disk device, it is possible to prevent the disk tray from shaking in the left and right direction at the time of stopping the ejection operation of the disk tray or starting the insertion operation of the disk tray, and thus it is possible to improve operation quality. Furthermore, it is possible for the switch lever to smoothly move past the switch rib from the inverted-shaped slope portion at the time of inserting the disk tray.

According to the optical disk device that exhibits the effects and advantages described above, since the number of components or assembling processes does not increase even when a metal mold of the disk tray is slightly changed to modify the shape of the switch rib, it is possible to manufacture the optical disk device without substantially increasing a cost.

### BRIEF DESCRIPTION OF THE DRAWINGS

The above objects and advantages of the present invention will become more apparent by describing in detail preferred exemplary embodiments thereof with reference to the accompanying drawings, wherein:
Fig. 1 is a top view illustrating an optical disk device according to an embodiment of the invention;
Fig. 2 is a top view schematically illustrating the optical disk device in the state where a disk tray is omitted;
Fig. 3 is a partially enlarged top view illustrating a main part of the optical disk device in the state where a part of the disk tray is notched;
Fig. 4 is an explanatory view illustrating a concave cuxve-shaped slope portion of a switch rib of the optical disk device;
Fig. 5 is a timing chart illustrating an operation for controlling the disk tray of the optical disk device;
Fig. 6 is a schematic view illustrating an effect and advantage of the optical disk device;
Fig. 7 is a partially enlarged top view illustrating a related-art optical disk device in the state where a part of a disk tray is notched; and
Fig. 8 is a schematic view illustrating a problem of the related-art optical disk device.

### DETAILED DESCRIPTION OF THE EMBODIMENTS

Hereinafter, an exemplary embodiment of the invention will be described with reference to the accompanying drawings.

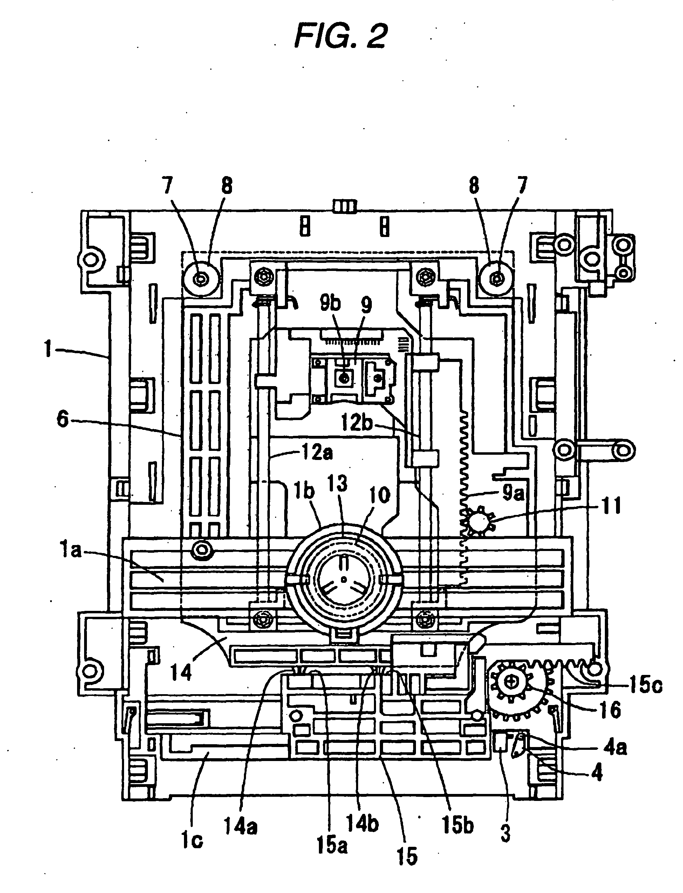

As shown in Fig. 2, the optical disk device includes a traverse chassis 6 formed of synthetic resin of which both back end portions are attached inside a loader chassis 1 formed of synthetic resin by use of an attachment screw 7 and a rubber damper 8 so as to be movable in the vertical direction, and the traverse chassis 6 is mounted with an optical pickup 9 and a turntable 10.

The optical pickup 9 is configured to move close to or move away from the turntable 10 along guide shafts 12a and 12b in terms of a rotation of a pinion 11 engaging with a rack 9a, and radiates a laser beam from an object lens 9b to an optical disk upon approaching the turntable 10 so as to perform a recording operation or a reproducing operation.

Additionally, the turntable 10 is fixed to an output shaft of a spindle motor (not shown) mounted to the traverse chassis 6, and thus rotates an optical disk with a center opening edge of the optical disk interposed between the turntable 10 and a clamper 13 thereabove when the traverse chassis 6 rotates upwardly. The clamper 13 is rotatably held by a clamper holding portion 1b at the center of a bridge portion 1a that is integrally formed with the loader chassis 1.

A lever shift 14 that is formed of synthetic resin is fixed to the front end portion of the traverse chassis 6, and two convex portions 14a and 14b are formed in the lever shift 14 so as to protrude frontward. A cam slider 15 which is formed of synthetic resin and which has cam grooves 15a and 15b to which the convex portions 14a and 14b are inserted is slidably attached to a front frame portion 1c of the loader chassis 1, and a rack 15c formed in the right end of the cam slider 15 is configured to engage with the pinion 16. Accordingly, when the pinion 16 rotates by engaging with the rack 15c, since the cam slider 15 slides in the left and right direction, and the convex portions 14a and 14b of the lever shift vertically moves while sliding along the cam grooves 15a and 15b, the traverse chassis 6 vertically moves about the attachment portions at both back end portions thereof.

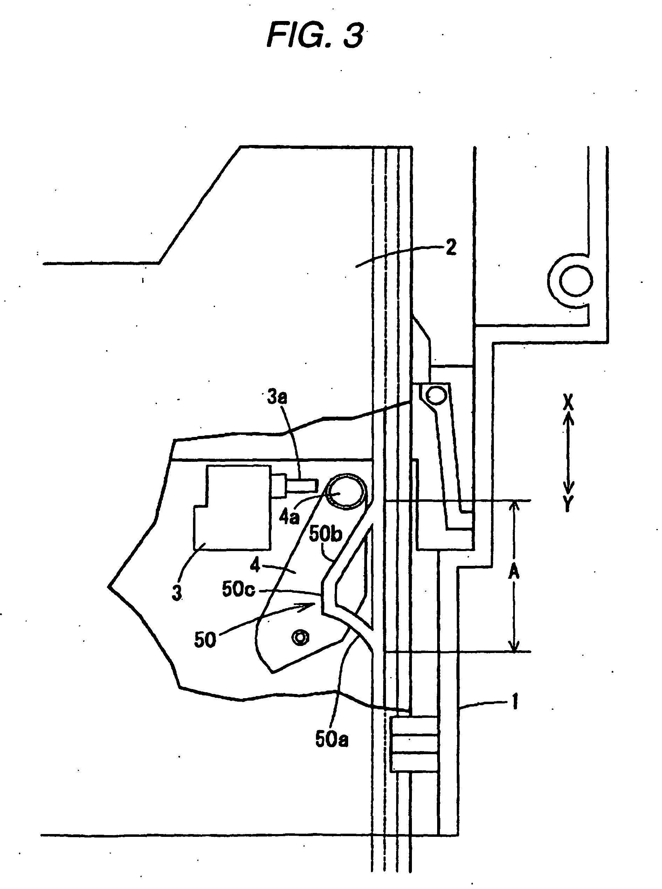

A tray-out switch 3 and a switch lever 4 for operating the tray-out switch 3 are attached to a position in the vicinity of the right end of the front frame portion 1c of the loader chassis 1. As shown in Fig. 3, the switch lever 4 is integrally formed with a circular boss portion 4a for pushing a push pin 3a of the tray-out switch 3 at the front end thereof, and the base end portion thereof is rotatably attached to the front frame portion 1c of the loader chassis 1.

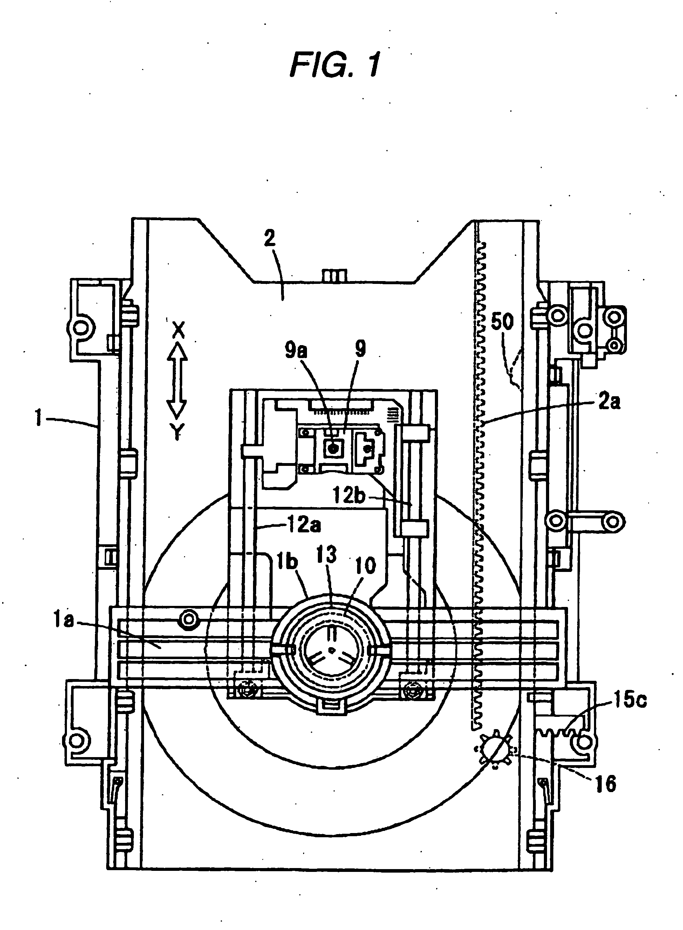

Additionally, as shown in Fig. 1, a disk tray 2 which loads an optical disk thereon to be inserted or ejected is disposed between the traverse chassis 6 and the bridge portion 1a and is attached inside the loader chassis 1 so as to be inserted or ejected. At this time, a rack 2a is formed at the right edge of the rear surface of the disk tray 2 in the insertion/ejection direction (X-Y direction). The rack 2a is configured to engage with the pinion 16 described above, and when the pinion 16 rotates, the disk tray 2 is inserted or ejected. Additionally, the pinion 16 and the pinion 11 which engages with the rack 9a of the optical pickup 9 receives a drive force from a drive motor (not shown) through a drive force transmission cogwheel mechanism (not shown).

As shown in Fig. 1, a switch rib 50 is formed in the rear surface of the right back end portion of the disk tray 2 so as to protrude inward. When the disk tray 2 is ejected to a position close to the stop position, the switch rib 50 pushes the switch lever 4 toward the tray-out switch 3 to operate (turn on) the switch 3. Accordingly, a voltage supply to the drive motor of the disk tray 2 is stopped to stop the disk tray 2. As shown in Fig. 3, a concave curve-shaped slope portion 50a (slope portion with a concave curve shape) is formed in the switch rib 50 in the ejection direction Y, and a straight-shaped slope portion 50b of which the slope is opposite to the concave curve-shaped slope portion 50a is formed in the switch rib 50 in the insertion direction X. The concave curve-shaped slope portion 50a and the straight-shaped slope portion 50b are connected with each other through a top portion 50c.

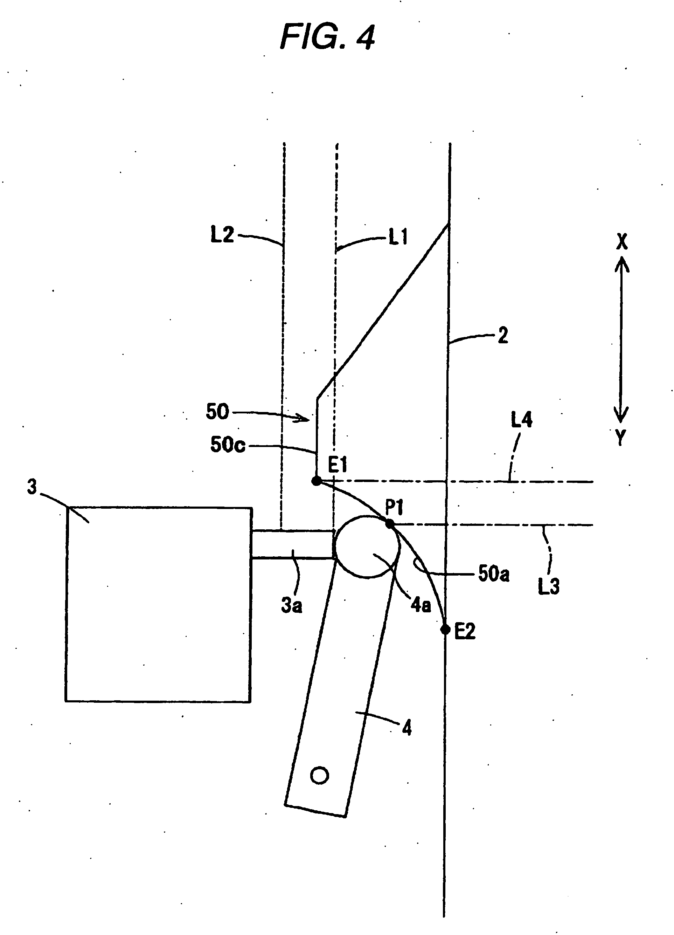

The concave curve-shaped slope portion 50a is a concave curve-shaped slope portion which is formed in a circular arc shape. As shown in Fig. 4, a slope angle (with respect to the movement direction X-Y of the disk tray) of the concave curve-shaped slope portion 50a at a switch lever pushing position P 1 when the boss portion 4a of the switch lever 4 comes into contact with the tray-out switch 3 to operate (turn on) the tray-out switch 3 is set to 45° or more, and a slope angle (with respect to the movement direction of the disk tray) of the end portion E1 of the concave curve-shaped slope portion 50a close to the switch rib top portion is set to 60° or less.

Accordingly, since the switch rib 50 pushes the boss portion 4a of the switch lever 4 to operate (turn on) the tray-out switch 3 in an effective pushing region (region from P1 to E1) of the concave curve-shaped slope portion 50a of which the slope angle is in the range of 45° to 60°, it is possible to reduce a region of stop-position variation (region from the dashed-dotted lines L3 to L4) of the disk tray 2 than the region of operation variation of the tray-out switch 3 (region from the dashed line L1 to the dashed line L2). Additionally, a slope angle of the end portion E2 of the concave curve-shaped slope portion 50a close to the switch rib bottom portion is small. Also, the slope angle becomes larger toward the end portion E1 close to the switch rib top portion and a maximum slope angle of the end portion E1 close to the switch rib top portion is 60° or less. Accordingly, interference sound does not occur between the concave curve-shaped slope portion 50a and the boss portion 4a of the switch lever 4. Further, it is not difficult to push the switch lever 4.

As shown in Fig. 3, a top portion 50c of the switch rib 50 is shortened, the length A of the switch rib 50 in the X-Y direction (movement direction of the disk tray) is made shorter than that of the related-art switch rib 5, and the switch rib 50 is slightly shifted in the ejection direction Y of the disk tray 2 relative to that of the relatea-art optical disk device so that the disk tray 2 is stopped after the boss portion 4a of the switch lever 4 is away from the push pin 3a of the tray-out switch 3 past the switch rib 50. As described above, there are provided the concave curve-shaped slope portion 50a and the inverted-shaped slope portion 50b on the side opposite thereto.

Therefore, when the disk tray 2 is stopped, the switch rib 50 of the disk tray 2 does not receive a repelling force from the push pin 3a of the tray-out switch 3 through the boss portion 4a of the switch lever 4. As a result, it is possible to prevent the disk tray 2 from shaking in the left and right direction at the time of stopping the ejection operation of the disk tray 2 or starting the insertion operation thereof, and thus it is possible to improve operation quality. Additionally, it is possible for the boss portion 4a of the switch lever 4 to smoothly move past the switch rib from the inverted-shaped slope portion 50b at the time of inserting the disk tray 2.

In the optical disk device having the above-described configuration, the cam slider 15 slides leftward and the traverse chassis 6 moves down in a tray open state where the disk tray 2 is ejected. When an optical disk is loaded on the disk tray 2 in the tray open state and then the optical disk is inserted to the loader chassis 1 by rotating the pinion 16 engaging with the rack 2a, the rack 15c of the cam slider 15 engages with the pinion 16. Accordingly, as shown in Fig. 2, the cam slider 15 slides rightward and the traverse chassis 6 rotates upwardly, so that the optical disk interposed between the turntable 10 and the clamper 13 rotates. Subsequently, the pinion 11 engaging with the rack 9a of the optical pickup 9 rotates and then the optical pickup 9 moves toward the turntable 10 along the guide shafts 12a and 12b. Consequently, a laser beam is radiated from the object lens 9b to the optical disk to thereby perform a recording operation or a reproducing operation.

When the recording operation or the reproducing operation ends, in reverse order, the disk tray 2 on which the optical disk is loaded is ejected, and in a position close to the stop position, the boss portion 4a of the switch lever 4 is pushed by the concave curve-shaped slope portion 50a of the switch rib 50 formed in the disk tray 2 so as to operate (turn on) the tray-out switch 3. Subsequently, a voltage supply to the drive motor of the disk tray 2 is stopped so as to stop the disk tray 2. However, as described above, since the slope portion of the switch rib 50 is constituted by the concave curve-shaped slope portion 50a of which the slope angle in the effective pushing region is in the range of 45° to 60°, and the length of the switch rib 50 is shortened so that the switch rib 50 is slightly shifted to the ejection direction Y, stop-position variation of the disk tray 2 is small and the shake of the disk tray 2 in the left and right direction can be prevented. Therefore, it is possible to remarkably improve operation quality.

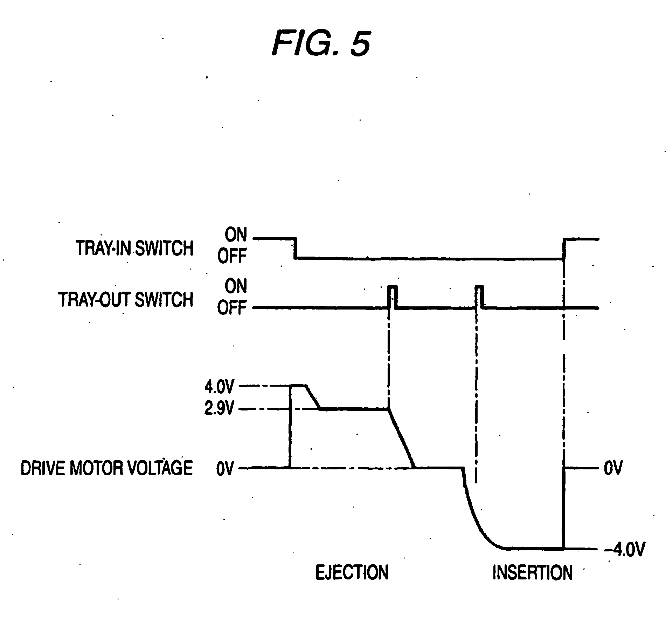

Next, a control operation of the disk tray 2 will be described with reference to the timing chart shown in Fig. 5. When a positive voltage is supplied to the drive motor of the disk tray 2 and an ejection operation of the disk tray 2 starts, a tray-in switch (not shown) changes from an ON state to an OFF state. Subsequently, when the boss portion 4a of the switch lever 4 is pushed by the concave curve-shaped slope portion 50a of the switch rib 50 in a position close to the stop position of the disk tray 2 so that the tray-out switch 3 changes to an ON state, a voltage supply to the drive motor is stopped in synchronization with a start of the signal and the disk tray 2 is stopped in a tray open state after a predetermined time. At this time, as described above, since the slope portion of the switch rib 50 is constituted by the concave curve-shaped slope portion 50a of which the slope angle in the effective pushing region is in the range of 45° to 60°, even when the region of operation variation of the tray-out switch 3 is large, variation in timing in which the tray-out switch 3 changes to an ON state becomes small, and thus it is possible to reduce stop-position variation of the disk tray 2. Additionally, since the tray-out switch 3 which changes to an ON state returns to an OFF state before the disk tray 2 is stopped, the push pin 3a does not apply a repelling force to the switch rib 50 of the disk tray 2 through the boss portion 4a of the switch lever 4, and thus it is possible to prevent the disk tray 2 from shaking in the left and right direction at the time of stopping the disk tray 2.

When a negative voltage is supplied to the drive motor of the disk tray 2 in the tray open state, an insertion operation of the disk tray 2 starts. However, even at this time, since the tray-out switch 3 is in an OFF state, and the push pin 3a does not apply a repelling force to the switch rib 50 of the disk tray 2 through the boss portion 4a of the switch lever 4, it is possible to prevent the disk tray 2 from shaking in the left and right direction at the time of inserting the disk tray 2. Additionally, even though the tray-out switch 3 changes to an ON state after starting the insertion operation of the disk tray 2, this case is ignored and then the tacay-out switch 3 immediately returns to an OFF state. When the insertion operation of the disk tray 2 ends, the tray-in switch returns to an ON state and then a voltage supply to the drive motor is stopped.

As described above, while the optical disk device according to the invention is described with reference to the exemplary embodiment, the invention is not limited thereto, but may be modified to various forms. For example, as the concave curve-shaped slope portion of the switch rib, a slope portion may be formed such that a curvature radius gradually decreases in a direction from the end portion close to the switch rib bottom side to that close to the switch rib top portion.

## Claims

1. An optical disk device, comprising:
a loader chassis (1) provided with a tray-out switch (3) and a switch lever (4) which is configured to operate the tray-out switch (3); and
a disk tray (2) mounted in the loader chassis (1) in a movable manner between a mounted position and a ejected position in a moving direction and formed with a switch rib (50) which has a first slope surface (50a) being sloped with respect to the moving direction; wherein
when the disk tray (2) is being ejected toward the ejected position, the first slope surface (50a) of the switch rib (50) pushes the switch lever (4) so that the switch lever (4) comes in contact with and operates the tray-out switch (3), thereby stopping a voltage supply to a drive motor of the disk tray (2);
the first slope surface (50a) has a cross section of a concave curve shape;
a slope angle of the first slope surface (50a) with respect to the moving direction at a switch lever pushing position (P1) when the switch lever (4) comes in contact with the tray-out switch (3) is set to 45° or more,
a slope angle of the first slope surface (50a) with respect to the moving direction at an end portion (E 1) of the first slope surface (50a) is set to 60° or less; and
the switch rib (50) pushes the switch lever (14) to operate the tray-out switch (3) in a region from the pushing position (P1) to the end position (E1) of the first slope surface (50a),
wherein
the switch rib (50) has a second slope surface (50b) of which the slope is opposite to the slope of the first slope surface (50a), the first slope surface (50a) and the second slope surface (50b) being connected with each other through a top portion of the switch rib (50), wherein said second slope surface (50b) is formed in the switch rib (50) so that the switch lever (4) is separated from the tray-out switch (3) when the disk tray (2) is ejected in the ejected position.

2. The optical disk device as set forth in claim 1, wherein the concave curve shape is a circular arc shape.

3. The optical disk device as set forth in claim 1 or 2, wherein the switch lever (4) has a circular-shaped boss portion (4a).

## Patentansprüche

1. Optische Plattenvorrichtung, aufweisend:
ein Ladechassis (1), versehen mit einem Schalter (3) zum Auswerfen einer Schale und einen Schalthebel (4), der konfiguriert ist, den Schalter (3) zum Ausbringen der Schale zu betätigen; und
eine Plattenschale (2), montiert in dem Ladechassis (1) in einer bewegbaren Weise zwischen einer montierten Position und einer ausgeworfenen Position in ein er Bewegungsrichtung und mit einer Schalterrippe (50) gebildet, die eine erste Neigungsoberfläche (50a) hat, die in Bezug auf die Bewegungsrichtung geneigt ist; wobei
wenn die Plattenschale (2) in Richtung zu der ausgeworfenen Position ausgeworfen wird, die erste geneigte Oberfläche (50a) der Schalterrippe (50) den Schalthebel (4) so drückt, dass der Schalthebel (4) in Kontakt kommt mit und den Schalter (3) zum Auswerfen der Schale betätigt, um dadurch eine Spannungszuführung zu dem Antriebsmotor der Plattenschale (2) zu stoppen;
wobei die erste Neigungsoberfläche (50a) einen Querschnitt einer konkaven Kurvenform hat;
ein Neigungswinkel der ersten Neigungsoberfläche (50a) in Bezug auf die Bewegungsrichtung an einer Schalthebel- Druckposition (P1), wenn der Schalthebel (4) mit dem Schalter (3) zum Auswerfen der Schale in Kontakt kommt, auf 45° oder mehr festgelegt wird,
ein Neigungswinkel der ersten Neigungsoberfläche (50a) in Bezug auf die Bewegungsrichtung an einem Endabschnitt (E1) der ersten Neigungsoberfläche (50a) auf 60° oder weniger festgelegt wird; und
die Schalterrippe (50) den Schalthebel (14) drückt, um den Schalter (3) zum Auswerfen der Schale in einem Bereich von der Druckposition (P1) zu der Endposition (E1) der ersten Neigungsoberfläche (50a) zu betätigen,
wobei
die Schalterrippe (50) eine zweite Neigungsoberfläche (50b) hat, deren Neigung der Neigung der ersten Neigungsoberfläche (50a) entgegengesetzt ist, die erste Neigungsoberfläche (50a) und die zweite Neigungsoberfläche (50b) miteinander durch einen Spitzenabschnitt der Schalterrippe (50) verbunden sind, wobei die zweite Neigungsoberfläche (50b) in der Schalterrippe (50) so gebildet ist, dass der Schalthebel (4) von dem Schalter (3) zum Auswerfen der Schale getrennt wird, wenn die Plattenschale (2) in die ausgeworfene Position ausgeworfen wird.

2. Optische Plattenvorrichtung nach Anspruch 1, wobei die konkave Kurvenform eine Kreisbogenform ist.

3. Optische Plattenvorrichtung nach Anspruch 1 oder 2, wobei der Schalthebel (4) einen kreisförmigen Vorsprung (4a) aufweist.

## Revendications

1. Dispositif à disque optique, comportant :
un châssis de chargeur (1) pourvu d'un contacteur de plateau sorti (3) et d'un levier de contacteur (4) qui est configuré pour actionner le contacteur de plateau sorti (3) ; et
un plateau de disque (2) monté dans le châssis de chargeur (1) d'une façon mobile entre une position montée et une position éjectée dans une direction de déplacement et formé avec une nervure de contacteur (50) qui a une première surface de pente (50a) qui est inclinée par rapport à la direction de déplacement ; dans lequel
quand le plateau de disque (2) est éjecté vers la position éjectée, la première surface de pente (50a) de la nervure de contacteur (50) pousse le levier de contacteur (4) de telle sorte que le levier de contacteur (4) vient en contact avec et actionne le contacteur de plateau sorti (3), en arrêtant ainsi une alimentation en tension d'un moteur d'entraînement du plateau de disque (2) ;
la première surface de pente (50a) a une section transversale d'une forme courbe concave ;
un angle de pente de la première surface de pente (50a) par rapport à la direction de déplacement dans une position de poussée de levier de contacteur (P1) quand le levier de contacteur (4) vient en contact avec le contacteur de plateau sorti (3) est établi à 45° ou plus,
un angle de pente de la première surface de pente (50a) par rapport à la direction de déplacement au niveau d'une partie d'extrémité (E1) de la première surface de pente (50a) est établi à 60° ou moins ; et
la nervure de contacteur (50) pousse le levier de contacteur (14) afin d'actionner le contacteur de plateau sorti (3) dans une zone depuis la position de poussée (P1) jusqu'à la position d'extrémité (E1) de la première surface de pente (50a),
la nervure de contacteur (50) ayant une deuxième surface de pente (50b) dont la pente est opposée à la pente de la première surface de pente (50a), la première surface de pente (50a) et la deuxième surface de pente (50b) étant reliées l'une à l'autre par l'intermédiaire d'une partie supérieure de la nervure de contacteur (50), ladite deuxième surface de pente (50b) étant formée dans la nervure de contacteur (50) de telle sorte que le levier de contacteur (4) est séparé du contacteur de plateau sorti (3) quand le plateau de disque (2) est éjecté dans la position éjectée.

2. Dispositif à disque optique selon la revendication 1, dans lequel la forme courbe concave est une forme d'arc circulaire.

3. Dispositif à disque optique selon la revendication 1 ou 2, dans lequel le levier de contacteur (4) a une partie de bossage de forme circulaire (4a).
